# EUROPÄISCHE PATENTSCHRIFT

(11) **EP 1 459 930 B1**
(45) Veröffentlichungstag und Bekanntmachung des Hinweises auf die Patenterteilung: **09.05.2007**
(21) Anmeldenummer: 04003245.0
(22) Anmeldetag: 13.02.2004
(51) Int. Cl.: B60K 31/04

(54) **Vorrichtung zum Beschleunigen und/oder Verzögern eines Kraftfahrzeugs und Verfahren zur Einstellung der Geschwindigkeit eines Kraftfahrzeugs**
Apparatus for acceleration and/or deceleration of a vehicle and method for controlling speed of a vehicle
Appareil pour d'accélération et de décélération d'un vehicule et Méthode de commande de vitesse d'un vehicule

(30) Priorität: 21.03.2003 DE 10312547
(43) Veröffentlichungstag der Anmeldung: 22.09.2004
(73) Patentinhaber: AUDI AG, 85045 Ingolstadt (DE)
(72) Erfinder: Mäusbacher, Bernhard, 85080 Gaimersheim (DE); Landsiedel, Thomas, 85110 Kipfenberg (DE)
(74) Vertreter: Thielmann, Frank

(56) Entgegenhaltungen:
- DE-A1- 4 404 594
- DE-A1- 10 064 307
- DE-A1- 19 811 268

## Beschreibung

Die Erfindung betrifft eine Vorrichtung zum Beschleunigen und/oder Verzögern eines Kraftfahrzeugs und eine Vorrichtung zur Einstellung der Geschwindigkeit eines Kraftfahrzeugs.

Eine Anlage zum Beschleunigen oder Verzögern eines Kraftfahrzeugs wird üblicherweise derart gesteuert, dass der Fahrer die Geschwindigkeit des Kraftfahrzeugs direkt regelt, indem er den Volumenstrom des Kraftstoffs für den Motor mittels eines Gaspedals und den Radbremsdruck mittels eines Bremspedals einstellt. Gaspedal und Bremspedal sind in der Regel als Fußpedale ausgestaltet. Das Wirkprinzip dieser Fußpedale besteht im Durchlaufen eines Schwenkweges infolge eines Betätigungsdrucks auf das Pedal. Aus diesem Pedalweg wird bei Pedalen, die mechanisch von der Aktorik der Anlage entkoppelt sind, ein Signal erzeugt, das zur Steuerung der Antriebsbeziehungsweise Bremsanlage weitergeleitet wird.

Die Verwendung von Pedalen bringt eine Reihe von Nachteilen mit sich. Beispielsweise stellen Fußpedale, die in den Fußraum des Fahrers hineinragen, ein erhöhtes Verletzungsrisiko für den Fahrer des Kraftfahrzeugs dar, da diese im Crashfall in den Fußraum hineinschwenken können. Weiterhin entsteht durch den Betätigungsweg des Pedals eine längere Schwellzeit bis zum vollen Einsatz der Bremskraft oder der Beschleunigung. Ebenfalls ist bei Fußpedalen nachteilig, dass, wenn der Fahrer seine Sitzposition falsch wählt, er in Notsituationen nicht in der Lage ist, das Pedal entsprechend weit zu treten.

In der nicht vorveröffentlichten DE 102 39 913 A1 wird daher ein Betätigungsmittel zum Beeinflussen einer Anlage zum Bremsen, Kuppeln oder Antreiben eines Kraftfahrzeugs vorgeschlagen, das mechanisch von der Akder Anlage entkoppelt ist und ein ausschließlich die Betätigungskraft des Fahrers detektierender Aufnehmer ist, der ein Steuersignal erzeugt, dessen Erzeugung von einem Betätigungsweg unabhängig ist und keinen Betätigungsweg hat.

Der Nachteil dieses Betätigungsmittels liegt darin, dass der Fahrer, wie bei einem Pedal, das Betätigungsmittel stets betätigen muss, um eine bestimmte Geschwindigkeit des Kraftfahrzeugs aufrecht zu erhalten.

Aus der Druckschrift DE 44 04 594 A1, das die Merkmale des Oberbegriffs der Ansprüche 1 und 24 zeigt, ist eine Bedieneinrichtung zum Beschleunigen und/oder Abbremsen eines Kraftfahrzeugs bekannt, welche ein Bedienelement aufweist. Das Bedienelement ist relativ zum Kraftfahrzeug bezüglich wenigstens zweier Verstell-Freiheitsgrade, welche eine Translationsbewegung und/oder eine Rotationsbewegung umfassen, vom Fahrer des Kraftfahrzeugs verstellbar. Abhängig von der Krafteinwirkung auf das Bedienelement wird dieses somit gemäß einer bestimmten Betätigungsart selbst bewegt, wobei abhängig von dieser Bewegung des Bedienelements ein entsprechendes Beschleunigen oder Abbremsen des Kraftfahrzeugs generiert wird.

Aus der Druckschrift DE 28 29 894 A1 ist weiterhin eine Vorrichtung zur selbsttätigen Regelung der Fahrgeschwindigkeit eines Kraftfahrzeugs mit Verbrennungsmotor bekannt. Dabei wird ein Sollwert, der von einem fußpedalbetätigten Sollwertgeber vorgegeben wird, laufend mit einem Istwert verglichen, der durch ein Messorgan ermittelt wird. Bei einer Abweichung zwischen dem Sollwert und dem Istwert wird mittels eines Reglers ein Stellglied verändert, um die Abweichung zu beseitigen. Demnach wird die Fahrgeschwindigkeit nicht mehr direkt, sondern indirekt durch Regelung der Beschleunigung oder der Verzögerung geregelt, so dass bei einer zuvor eingestellten Wunschgeschwindigkeit kein weiterer Beschleunigungs- bzw. Verzögerungssollwert vom Fahrer vorgegeben werden muss und der das Gaspedal bzw. das Bremspedal bedienende Fuß des Fahrers frei wird.

Aufgabe der vorliegenden Erfindung ist es, eine Vorrichtung zum Beschleunigen oder Verzögern eines Kraftfahrzeugs und ein Verfahren zum Einstellen der Geschwindigkeit eines Kraftfahrzeugs zu schaffen, wobei der Fahrkomfort erhöht werden soll, die Gestaltung eines crash-optimierten Fußraums ermöglicht und der Anhalteweg verkürzt werden soll.

Diese Aufgabe wird gemäß einem ersten Aspekt der Erfindung gelöst durch eine Vorrichtung zum Beschleunigen und/oder Verzögern eines Kraftfahrzeugs, die zumindest ein Betätigungselement zum Beschleunigen oder Verzögern des Kraftfahrzeugs aufweist, wobei das mindestens eine Betätigungselement wegfrei arbeitet, dadurch gekennzeichnet, dass die Geschwindigkeit des Kraftfahrzeugs nach dem Wegnehmen der Betätigungskraft von dem Betätigungselement in Abhängigkeit der zuletzt eingestellten Geschwindigkeit konstant gehalten wird.

Erfindungsgemäß wird die Geschwindigkeit des Kraftfahrzeugs so lange konstant gehalten, bis ein Ereignis eintritt, das eine Geschwindigkeitsänderung hervorruft. Ein solches Ereignis kann die erneute Betätigung eines der Betätigungselemente durch den Fahrer, der Eingriff eines Fahrerassistenzsystems und/oder das Wirken von Einflüssen, die unabhängig von der Betätigungskraft sind, wie beispielsweise dem Fahrtwiderstand, sein.

Durch das Halten der Geschwindigkeit in Abhängigkeit der zuletzt eingestellten Geschwindigkeit, die durch eine Fuß- oder Handkraft eingestellt worden sein kann, wird das Bedienen der Vorrichtung komfortabler, da nur der Wunsch nach einer Änderung der Geschwindigkeit eine Betätigung eines der Betätigungselemente notwendig macht.

Durch das Vorsehen von wegfrei arbeitenden Betätigungselementen wird es darüber hinaus möglich, diese frei innerhalb des Fußraums zu positionieren und es entfällt jegliche mechanische Anbindung an mechanische Aktuatoren, so dass keine Pedale mehr in den Fußraum des Kraftfahrzeugs hineinschwenken können. Hierdurch kann der Fußraum crash-optimiert ausgestaltet werden. Weiterhin verkürzt sich durch die wegfrei arbeitenden Betätigungselemente der Anhalteweg des Kraftfahrzeugs, da die bei einer Notbremsung erforderliche Betätigungskraft schneller auf das entsprechende Betätigungselement aufgebracht werden kann. Schließlich verbessern die wegfrei arbeitenden Betätigungselemente für den Fahrer des Kraftfahrzeugs die Ergonomie, da die Hand- oder Fußposition beim Beschleunigen bzw. beim Verzögern des Kraftfahrzeugs grundsätzlich nicht mehr verändert werden muss.

Zudem weist eine Vorrichtung, bei der wegfrei arbeitende Betätigungselemente zum Beschleunigen oder Verzögern des Kraftfahrzeugs verwendet werden und diese Betätigungselemente gleichzeitig verwendet werden, um eine Geschwindigkeit zu bestimmen, die vom Fahrer gewünscht ist, den Vorteil auf, dass der Fahrer nur noch eine einzige Vorrichtung bedienen muss. Daher kann im Vergleich zur Verwendung eines separaten Tempomaten sowohl die Sicherheit als auch der Fahrkomfort gesteigert werden.

Gemäß einer Ausführungsform umfasst die Vorrichtung zumindest eine Reglereinheit, in der die Geschwindigkeit des Kraftfahrzeugs geregelt wird. Alternativ kann in der Vorrichtung auch eine Reglereinheit vorgesehen sein, in der die Beschleunigung beziehungsweise Verzögerung geregelt wird. Durch die Integration der Reglereinheit in die Vorrichtung zum Beschleunigen und/oder Verzögern des Kraftfahrzeugs kann ein separater Tempomat entfallen.

Vorzugsweise weist die Reglereinheit einen Geschwindigkeitsregler mit zumindest einem P-Anteil und einem I-Anteil auf. Durch diese Art der Regelung der Geschwindigkeit können die Vorteile des P-Reglers bezüglich des Anfangsverhaltens und die Vorteile des I-Reglers beim Ausgangsverhalten ideal genutzt werden. Als Resetbedingung für den I-Anteil des Reglers wird vorzugsweise der Übergang der Fahrerwunschbeschleunigung auf 0 m/s² festgelegt. Dies ist der Zeitpunkt, zu dem der Fahrer keine Betätigungskraft auf die Betätigungselemente aufbringt. Der Regler wird vorzugsweise aktiviert, wenn erkannt wird, dass ein Gang eingelegt ist und die Fahrerwunschbeschleunigung gleich Null ist, d.h. 0 m/s² beträgt. Zu diesem Zeitpunkt befindet sich das Fahrzeug in Fahrt und die Geschwindigkeit entspricht der durch den Fahrer gewünschten Soll-Geschwindigkeit. Als weitere Resetbedingung kommt auch der Gangwechsel, beispielsweise von "D" auf "N" oder von "D" auf "R" in Betracht.

Gemäß einer Ausführungsform weist die Reglereinheit zumindest eine Logikeinheit auf, in der zumindest ein Logikblock vorgesehen ist, in dem mindestens ein Einfluss, der von der aufgebrachten Betätigungskraft unabhängig ist, berücksichtigt wird. Von der Betätigungskraft unabhängige Einflüsse stellen Zustände dar, die die Beschleunigungen oder Verzögerungen des Fahrzeugs verursachen, die aber nicht unmittelbar durch die Betätigungskraft verursacht wurden oder mit dieser zusammenhängen. Diese Einflüsse können Bedingungen innerhalb des Fahrzeugs oder in der Fahrzeugumgebung darstellen. Durch diesen Logikblock kann zumindest ein Teil der Störgrößen, die durch die Reglereinheit ausgeregelt werden müssen, um die Geschwindigkeit konstant zu halten, quantifiziert werden. Dies liefert eine größere Flexibilität der Reglereinheit und gewährt ein schnelleres und zuverlässigeres Einregeln. In dieser Ausführungsform wird somit die Geschwindigkeit konstant gehalten bis entweder der Fahrer eines der Betätigungselemente erneut betätigt oder beispielsweise ein Fahrerassistenzsystem eine Geschwindigkeitsveränderung verlangt.

In einer Ausführungsform kann der Logikblock der Reglereinheit zum Konstanthalten der Geschwindigkeit bei Nichtbetätigung wahlweise aktiv oder inaktiv geschaltet werden. Diese Ausgestaltung weist den Vorteil auf, dass beim Inaktivieren des Logikblocks zum einen zwar ein ständiges Bedienen des Betätigungselements zum Halten einer Geschwindigkeit nicht notwendig ist, aber der Fahrer beim Auftreten von Einflüssen, die eine Beschleunigung oder Verzögerung des Fahrzeugs hervorrufen, eingreifen muss. Dies wird von Fahrern, die eine sportliche Fahrweise bevorzugen, gefordert. Soll hingegen ein komfortables Fahrgefühl vermittelt werden, bei dem der Fahrer nur dann eines der Betätigungselemente bedienen muss, wenn er eine Geschwindigkeitsveränderung wünscht, so wird der Logikblock aktiviert. Es kann somit eine Betriebsweise der Vorrichtung, in der die Geschwindigkeit bei Nichtbetätigung der Betätigungselemente konstant gehalten wird (Komfortmodus), und einer Betriebsweise der Vorrichtung, bei der beim Nichtbetätigen der Betätigungselemente das Motorschleppmoment oder andere applizierte Verzögerungen wirken (Sportmodus), ermöglicht werden. Insbesondere können weiterhin beispielsweise die Radmomente gleich Null gesetzt werden, was dann sinnvoll ist, wenn sich das Fahrzeug beispielsweise auf einer glatten Fahrbahn befindet. Die Umschaltung zwischen den unterschiedlichen Modi kann manuell erfolgen.

Der Logikblock zur Berücksichtung von Verzögerungs- oder Beschleunigungseinflüssen ist vorzugsweise mit zumindest einer Bestimmungseinheit zur Bestimmung von Antriebsverzögerungseinflüssen verbunden. Antriebsverzögerungseinflüsse können Umgebungs- oder Kraftfahrzeugbedingungen und insbesondere einstellbare Größen sein. Umgebungsbedingungen können beispielsweise die Steigung der Fahrbahn sein. Kraftfahrzeugbedingungen sind beispielsweise der Roll- oder der Luftwiderstand, die Fahrzeugmasse, Verlustmomente von Motor und Getriebe und Übersetzung. Aufgrund der für diese Einflüsse bestimmten Werte kann der dadurch zu erwartende Einfluß auf Verzögerung oder Beschleunigung des Fahrzeugs ermittelt werden. Diese Einflüsse können in dem Logikblock gemeinsam berücksichtigt werden, oder aber einzeln an unterschiedliche Logikblöcke geleitet werden.

Vorzugsweise wird aber in dem Logikblock zur Berücksichtung von Verzögerungs- oder Beschleunigungseinflüssen die durch das Motorschleppmoment maximal mögliche Verzögerung berechnet werden. Dieser Wert kann anschließend für die Bestimmung der notwendigen Ansteuerung von Beschleunigungs- oder Verzögerungsmitteln verwendet werden.

Um die Regelgüte der Reglereinheit zu verbessern, kann dem Logikblock zur Berücksichtigung von Verzögerungs- oder Beschleunigungseinflüssen zumindest eine Einheit zur Schätzung von Einflussgrößen zugeordnet sein. Solche Größen, deren Schätzung möglich und sinnvoll sind, sind beispielsweise die Kraftfahrzeugmasse und die Fahrbahnsteigung. Die Schätzungseinheit kann in dem Logikblock zur Berücksichtigung der Einflüsse integriert sein, Teil einer anderen Einrichtung, wie eines Fahrerassistenzsystems sein, oder aber eine separate Einheit darstellen. Durch eine solche Schätzungseinheit kann beispielsweise das Problem gelöst werden, dass die Masse des Fahrzeugs variiert, wenn beispielsweise ein Anhänger mit dem Kraftfahrzeug verbunden wird. Die Schätzung kann gegebenenfalls auch auf Lernprozessen basieren, bei denen die Ermittlung der Masse und/oder Steigung aus Verzögerungs- und Beschleunigungsvorgängen erfolgt. Hierbei wird durch den Vergleich von Ist- und Sollwerten für die Beschleunigung oder die Verzögerung auf die Masse und/oder die Steigung zurückgeschlossen.

In einer Ausführungsform weist die Logikeinheit zumindest einen Logikblock für die Bremse des Kraftfahrzeugs, einen Logikblock für den Antrieb des Kraftfahrzeugs und zumindest einen Logikblock für die Koordination der Ausgaben von den anderen Logikblöcken oder weiteren Einrichtungen des Kraftfahrzeugs auf. Durch das Vorsehen solcher Funktionsblöcke kann unterschiedlichen Bedingungen schnell und zuverlässig Rechnung getragen werden. So kann bei der Koordination der Ausgaben von Logikblöcken oder anderen Einrichtungen beispielsweise bei einer negativen Fahrerwunschbeschleunigung entschieden werden, ob die negative Fahrerwunschbeschleunigung durch das Motorschleppmoment eingestellt werden kann oder zusätzlich der Bremsaktuator aktiviert werden muß.

Die weiteren Einrichtungen des Kraftfahrzeugs können beispielsweise Fahrerassistenzsysteme darstellen. Durch die Berücksichtigung der Ausgabe solcher System kann bei geeigneter Einstellung von Prioritäten ein Bremsvorgang, der durch ein solches System initiiert werden soll, vorrangig berücksichtigt werden. Dadurch kann die Sicherheit gesteigert werden. Ausgaben der weiteren Einrichtungen, wie beispielsweise einer Abstandsreglung (Adaptive Cruise Control ACC) können auch an anderen Stellen der erfindungsgemäßen Vorrichtung, wie beispielsweise in dem Steuergerät der Bremsvorrichtung oder dem Motorsteuergerät berücksichtigt werden. Mit der erfindungsgemäßen Vorrichtung kann auch ein Fahrerassistenzsystem verbunden sein, bei dem die Geschwindigkeit entsprechend einem ACC-System in Abhängigkeit des Abstands zu vorausfahrenden Fahrzeugen angepasst wird, wobei die Geschwindigkeit bis auf Werte von 0 km/h reduziert werden kann. Hierdurch wird ein komfortables Fahren auch in einem Stop-und-Go Betrieb ermöglicht.

Die beiden Betätigungselemente können jeweils ein Signalerfassungsglied aufweisen, welches die zur Betätigung der Betätigungselemente aufgebrachte Betätigungskraft erfasst und in ein elektrisches Spannungssignal umwandelt. Das Signalerfassungsglied ist beispielsweise als ein piezokeramischer Kraftaufnehmer, Dehnungsmessstreifen oder Drehmomentenaufnehmer ausgeführt, welcher die aufgebrachte Betätigungskraft erfasst, je nach Größe in ein proportionales Spannungssignal umwandelt und gegebenenfalls auch eine Plausibilitätsbetrachtung der Ein- und Ausgangssignale durchführt.

Den beiden Betätigungselementen können in einer Ausführungsform in einer Einheit zur Signalverarbeitung erste Signalverarbeitungsglieder, zweite Signalverarbeitungsglieder und eine Kombinationseinheit zugeordnet sein.

Die ersten Signalverarbeitungsglieder, die jeweils dem ersten und zweiten Betätigungselement zugeordnet sind, können in einer Ausführungsform das von dem Signalerfassungsglied ausgegebene elektrische Spannungssignal anhand einer ersten Kennlinie in ein Beschleunigungs- bzw. Verzögerungssignal umwandeln.

Vorzugsweise sind in der Vorrichtung mindestens zwei Kennlinien abgespeichert, die wahlweise zur Umwandlung des elektrischen Spannungssignals verwendet werden können. Die unterschiedlichen Kennlinien können den unterschiedlichen Charakteristiken des Fahrzeugs Rechnung tragen oder aber unterschiedliche Fahrereigenschaften widerspiegeln. So kann beispielsweise bei einem Fahrer, der komfortbetont ist und nur eine geringe Betätigungskraft auf die Betätigungselemente aufbringen möchte, eine Kennlinie gewählt werden, bei der bereits eine geringere Kraft einer größeren Beschleunigung bzw. Verzögerung entspricht. Ist der Fahrer hingegen sportlich orientiert, so kann eine Kennlinie gewählt werden, bei der erst eine höhere Kraft einer solchen Beschleunigung bzw. Verzögerung entspricht. Die Auswahl kann hierbei manuell erfolgen. Vorzugsweise kann die Kennlinie ausgewählt werden, indem fahrerspezifische Angaben, wie beispielsweise "Sportlich/Komfort", gemacht werden. Die gewählte Einstellung kann in einem Display, beispielsweise im Armaturenbrett, angezeigt werden.

Den beiden Betätigungselementen kann jeweils ein zweites Signalverarbeitungsglied zugeordnet sein, das das von dem ersten Signalverarbeitungsglied erhaltene Beschleunigungs- oder Verzögerungssignal anhand einer zweiten optimierten Kennlinie in ein optimiertes Beschleunigungs- bzw. Verzögerungssignal umwandelt. Auch hierbei kann für die optimierte Kennlinie ein entsprechend geeigneter Kennlinienverlauf gewählt werden.

Durch die ersten und zweiten Signalverarbeitungsglieder wird dem Fahrer beim Betätigen der beiden wegfrei arbeitenden Betätigungselemente also ein für das Kraftfahrzeug charakteristisches und gegebenenfalls dem Fahrer angepasstes Fahrgefühl vermittelt.

Alternativ können die ersten Signalverarbeitungsglieder auch Filter darstellen, durch die ein gefiltertes elektrisches Spannungssignal erzeugt und an ein zweites Signalverarbeitungsglied geleitet wird. In dem zweiten Signalverarbeitungsglied erfolgt dann eine Umwandlung des Spannungssignals anhand einer Kennlinie in ein Verzögerungs- oder Beschleunigungssignal.

In einer weiteren Ausführungsform weist die Vorrichtung zumindest eine Kombinationseinheit auf, in der die Signale, die von den Betätigungselementen erzeugt werden, miteinander verarbeitet werden. Der Kombinationseinheit können je nach der Ausführungsform der Vorrichtung optimierte Beschleunigungs- bzw. Verzögerungssignale oder aber aufgrund gefilterter elektrischer Spannungssignale erzeugte Beschleunigungs- oder Verzögerungssignale zugeführt werden. Aus diesen Signalen wird in der Kombinationseinheit dann die Fahrerwunschbeschleunigung bestimmt.

Die Verarbeitung der beiden Signale in der Kombinationseinheit kann ein Aufsummieren der Werte der beiden Signale oder aber eine reine Überprüfung des Vorliegens eines Signals darstellen. Insbesondere kann bei dieser Überprüfung, wenn das Vorliegen eines Verzögerungssignals erkannt wird, diesem der Vorrang gegenüber einem Beschleunigungssignal eingeräumt werden. Dabei kann das Kombinationselement bewirken, dass ein Beschleunigungssignal, das gegebenenfalls optimiert wurde, nur dann als Sollwertsignal ausgegeben wird, wenn nicht auch ein Verzögerungssignal, das ebenfalls optimiert sein kann, vorliegt.

In der Kombinationseinheit wird weiterhin vorzugsweise das aus dem Beschleunigungs- oder Verzögerungssignal generierte Fahrerwunschsignal für die Beschleunigung bzw. Verzögerung des Kraftfahrzeugs bei der Wegnahme der auf das erste oder zweite Betätigungselement aufgebrachten Betätigungskraft auf Null gesetzt, was dem Wunsch nach einer konstanten Beibehaltung der.Geschwindigkeit entspricht.

Die optimierte Kennlinie kann eine Hysterese aufweisen. Diese verläuft vorzugsweise so, dass der aufsteigende Zweig der Hysterese gegenüber dem abfallenden Zweig der Hysterese zu höheren Werten des Beschleunigungs- bzw. Verzögerungssignals versetzt ist. Durch die Hysterese wird bei der Bedienung der Betätigungselemente ein erhöhter Komfort gewährleistet. Fährt das Kraftfahrzeug beispielsweise über Bodenunebenheiten, so führt eine leicht schwankende Betätigungskraft nicht automatisch zu einem Ruckeln des Kraftfahrzeugs. Ein flacher Verlauf der Hysterese ermöglicht unter anderem ein gut dosierbares Verzögern des Kraftfahrzeugs in den Stand, wie es zum Beispiel vor einer roten Ampel erwünscht ist. Die Hysterese der optimierten Kennlinie erweist sich aber auch aus anderen Gründen als komfortabel, da sich die zum Halten des Kraftfahrzeugs notwendige Betätigungskraft verringert, sofern keine Autostop-Funktion verbaut ist.

Alternativ kann aber auch eine kraftproportionale Beschleunigungs- bzw. Verzögerungsanforderung verwendet werden. Hierbei stehen das Kraftniveau und die Beschleunigung bzw. Verzögerung in einem linearen Verhältnis.

Die Kennlinie zur Umwandlung des elektrischen Spannungssignals in Beschleunigungs- bzw. Verzögerungssignale und/oder die optimierte Kennlinie kann zweckmäßiger Weise in ihrem unteren Bereich einen Schwellwert aufweisen, der überschritten werden muss, bevor ein Beschleunigungs- oder Verzögerungssignal ausgegeben wird. Ein solcher Schwellenwert wird als Betätigungssuchkraft definiert. Demnach wird erst dann, wenn sich die Hand oder der Fuß des Fahrers auf dem Betätigungselement eingerichtet hat, ein Beschleunigungs- oder Verzögerungssignal ausgegeben.

Die erfindungsgemäße Vorrichtung ist vorzugsweise so dynamisch ausgelegt, dass die Betätigungsänderung an den Betätigungselementen in weniger als 50ms in dem Kraftfahrzeug spürbar wird.

Die Komponenten der erfindungsgemäßen Vorrichtung, insbesondere die Reglereinheit und/oder die Signalverarbeitungseinheit, können in das Motorsteuergerät bzw. das Bremssteuergerät ganz oder teilweise integriert sein. Insbesondere können die Logikblöcke in den entsprechenden Steuergeräten integriert sein.

Gemäß einer ersten Ausführungsform sind die beiden Betätigungselemente in das Bodenblech des Kraftfahrzeugs integriert. Durch eine entsprechende Ausformung des Bodenblechs sind die glattflächigen Betätigungselemente ergonomisch und verwechslungssicher positionierbar und es steht dem Fahrer des Kraftfahrzeugs ein großer Fußraum zur Verfügung.

Alternativ können die beiden Betätigungselemente durch einen oder mehrere auf dem Bodenblech des Kraftfahrzeugs angeordnete Adapter gebildet sein. Solche Adapter erhöhen bei der Crashoptimierung des Fußraums die Gestaltungsfreiheit.

Vorzugsweise sind die beiden Betätigungselemente im wesentlichen in einer gemeinsamen Ebene angeordnet. Dies ist erfindungsgemäß dadurch möglich, dass die Betätigungselemente frei im Fußraum positioniert werden können. Somit können die Betätigungselemente beispielsweise symmetrisch zur Sitzfläche ausgerichtet sein und eine Zweifußbedienung, wie diese bei Kart-Fahrzeugen bekannt ist, ermöglicht werden. Es ist aber auch möglich die beiden Betätigungselemente leicht versetzt zueinander anzuordnen. Steht das Betätigungselement zum Verzögern dabei in Fahrtrichtung ca. 50 Millimeter hinter dem Betätigungselement zum Beschleunigen, so kann in einer Notsituation das Wechseln von dem Betätigungselement zum Beschleunigen auf das Betätigungselement zum Verzögern zuverlässig erfolgen.

Gemäß einem weiteren Aspekt der Erfindung wird die Aufgabe gelöst durch ein Verfahren zur Einstellung der Geschwindigkeit eines Kraftfahrzeugs, das zumindest ein Betätigungselement zur Verzögerung oder zum Beschleunigen des Kraftfahrzeugs umfasst. Das Verfahren ist dadurch gekennzeichnet, dass die Geschwindigkeit des Kraftfahrzeugs auf die Geschwindigkeit, die das Kraftfahrzeug bei Beendigung der letzten Betätigung eines Betätigungselements aufwies, eingeregelt wird, aufgrund des Reglerausgangs eine Sollbeschleunigung bestimmt wird, diese mit einem Wert für eine maximale Antriebsverzögerung, die durch das Motorschleppmoment erzielt werden kann, verarbeitet wird und daraus koordinierte Brems- und Motoranforderungen erzeugt werden.

Die Merkmale und Vorteile, die bezüglich des Verfahrens beschrieben werden, gelten entsprechend und soweit anwendbar auch für die Vorrichtung und umgekehrt.

Die Erfindung wird im folgenden anhand von Figuren näher erläutert. Es zeigen:
Figur 1: eine schematische Darstellung einer Ausführungsform einer Vorrichtung zum Beschleunigen oder Verzögern eines Kraftfahrzeugs gemäß der vorliegenden Erfindung;
Figur 2: eine schematische Darstellung einer weiteren Ausführungsform einer Vorrichtung zum Beschleunigen oder Verzögern eines Kraftfahrzeugs gemäß der vorliegenden Erfindung, und
Figur 3: einen möglichen Verlauf einer optimierten Kennlinie, wie sie bei der erfindungsgemäßen Vorrichtung angewendet werden kann.

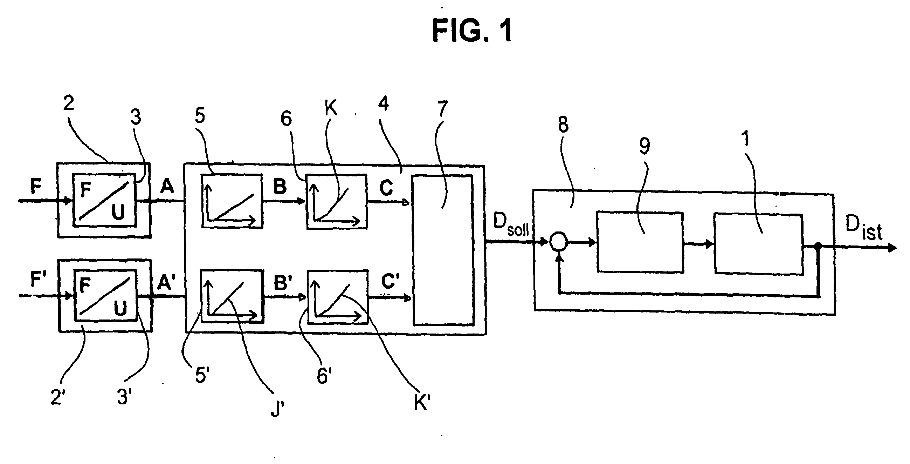

Die in Figur 1 gezeigte Vorrichtung zum Beschleunigen oder Verzögern eines Kraftfahrzeugs 1 weist zwei Betätigungselemente 2, 2' auf. Diese Betätigungselemente 2, 2' sind in der Praxis als Handbetätigungen oder Fußbetätigungen ausgestaltet, wobei das erste Betätigungselement 2 zum Beschleunigen und das zweite Betätigungselement 2' zum Verzögern des Kraftfahrzeugs 1 dient.

Die beiden Betätigungselemente 2, 2' sind von der Aktorik zum Beschleunigen oder zum Verzögern des Kraftfahrzeugs mechanisch entkoppelt, stehen aber elektrisch damit in Verbindung. Die Betätigung der Betätigungselemente 2, 2' erfolgt weitestgehend wegfrei, das heißt ohne eine für den Fahrer des Kraftfahrzeugs 1 spürbare Veränderung der Stellung der Betätigungselemente 2, 2'. Hierzu umfassen das erste Betätigungselement 2 und das zweite Betätigungselement 2' in der dargestellten Ausführungsform jeweils ein Signalerfassungsglied 3, 3', wie beispielsweise einen piezokeramischen Kraftaufnehmer, Dehnungsmessstreifen oder Drehmomentenaufnehmer, die auch redundant ausgeführt sein können. Durch das Signalerfassungsglied 3, 3' wird eine vom Fahrer des Kraftfahrzeugs 1 bei Betätigung des ersten oder zweiten Betätigungselements 2, 2' aufgebrachte Hand- oder Fußkraft F, F' erfasst und proportional dazu in ein elektrisches Spannungssignal A, A' umgewandelt. Dabei können innerhalb der Betätigungselemente 2, 2' und/oder innerhalb der Signalerfassungsglieder 3, 3' auch Plausibilitätsbetrachtungen der Ein- und Ausgangssignale durchgeführt werden.

Nachfolgend ist dem ersten und zweiten Betätigungselement 2, 2' eine Einrichtung zur Signalverarbeitung 4 mit ersten Signalverarbeitungsgliedern 5, 5', zweiten Signalverarbeitungsgliedern 6, 6' sowie einer Kombinationseinheit 7 zugeordnet.

Das erste Signalverarbeitungsglied 5, 5' wandelt das elektrische Spannungssignal A, A' des Signalerfassungsgliedes 3, 3' anhand einer ersten Kennlinie J, J' in ein Beschleunigungs- oder Verzögerungssignal B, B' um.

Das zweite Signalverarbeitungsglied 6, 6' wandelt das Beschleunigungs- oder Verzögerungssignal B, B' des ersten Signalverarbeitungsgliedes 5, 5' anhand einer zweiten optimierten Kennlinie K, K' in ein optimiertes Beschleunigungs- bzw. Verzögerungssignal C, C' um.

Grundsätzlich könnten die ersten und zweiten Signalverarbeitungsglieder 5 und 6 bzw. 5' und 6' aber auch zu jeweils einem Signalerfassungsglied 5+6 bzw. 5'+6' zusammengefasst sein, so dass dementsprechend auch die beiden Kennlinien J und K bzw. J' und K' zu einer optimierten Kennlinie zusammengefasst wären.

Die optimierten Beschleunigungs- und Verzögerungssignale C, C' werden anschließend in der Kombinationseinheit 7 zusammengeführt. In dieser Kombinationseinheit 7 wird in der dargestellten Ausführungsform ein Sollwertsignal Dₛₒₗₗ generiert, das zum Beschleunigen oder Verzögern des Kraftfahrzeugs 1 ausgegeben wird. Dabei bewirkt die Kombinationseinheit 7, dass das aus dem optimierten Beschleunigungs- und Verzögerungssignal C, C' generierte Sollwertsignal Dₛₒₗₗ für die Beschleunigung bzw. Verzögerung des Kraftfahrzeugs 1 bei einer vollständigen Wegnahme der auf das erste oder zweite Betätigungselement 2, 2' aufgebrachten Betätigungskraft F, F' auf Null gesetzt wird, was dem Wunsch nach Konstanthalten der Geschwindigkeit entspricht. Zudem kann in der dargestellten Ausführungsform die Kombinationseinheit 7 bewirken, dass ein optimiertes Beschleunigungssignal C sicherheitshalber nur dann als Sollwertsignal Dₛₒₗₗ ausgegeben wird, wenn kein optimiertes Verzögerungssignal C' vorliegt.

Das Sollwertsignal Dₛₒₗₗ der Beschleunigung bzw. Verzögerung wird daraufhin einer Regeleinrichtung 8 der Beschleunigung oder Verzögerung des Kraftfahrzeugs 1 zugeführt. Die Regeleinrichtung 8 umfasst in der dargestellten Ausführungsform einen Regler 9 und regelt die Beschleunigung bzw. Verzögerung anhand des vom Kraftfahrzeug 1 erreichten Ist-Wertsignal Dᵢₛₜ der Beschleunigung nach.

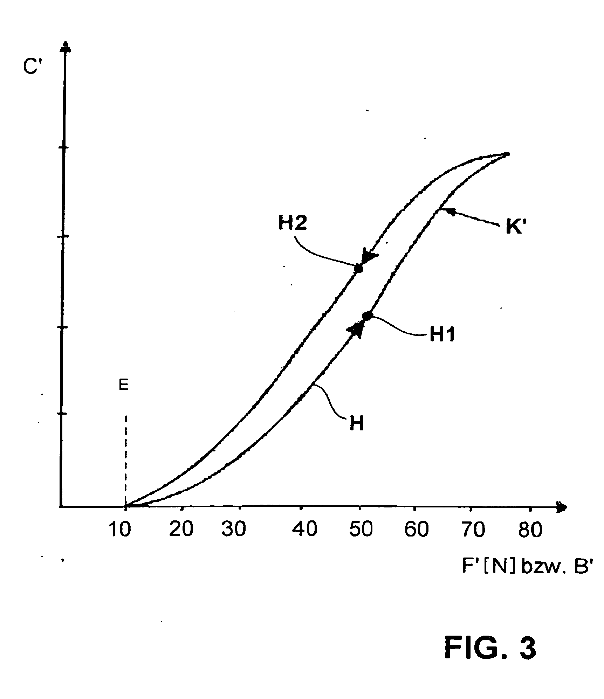

Beispielhaft für das zweite Betätigungselement 2', das zum Verzögern des Kraftfahrzeugs 1 dient, ist bei der in Figur 3 gezeigten Darstellung eine optimierte Kennlinie K' gezeigt, wobei die Hand- oder Fußkraft F' bzw. das Verzögerungssignal B' auf der Ordinate und das optimierte Verzögerungssignal C' auf der Abzisse aufgetragen ist.

Die optimierte Kennlinie K' weist eine Hysterese H auf. Dabei ist der ansteigende erste Zweig H1 der Hystereseschleife gegenüber dem abfallenden zweiten Zweig H2 der Hystereseschleife ähnlich ausgebildet, jedoch zu geringeren Werten des Verzögerungssignals B' versetzt. Aufgrund der Hysterese H der optimierten Kennlinie K' zeigt die Vorrichtung zum Beschleunigen oder Verzögern eines Kraftfahrzeugs 1 besondere Komfortmerkmale.

In ihrem unteren Bereich zeigt die optimierte Kennlinie K' bis zu einem Schwellenwert E von beispielsweise 10 Newton, der auch als Betätigungssuchkraft bezeichnet wird, kein optimiertes Verzögerungssignal C', so dass über die zweite Betätigungseinrichtung 2' auch keine Ansteuerung der Vorrichtung zum Beschleunigen oder Verzögern des Kraftfahrzeugs 1 erfolgt. Erst oberhalb des Schwellenwertes E wird ein optimiertes Verzögerungssignal C' ausgegeben und die Vorrichtung angesteuert.

Die optimierte Kennlinie K' ist jedoch nicht nur beim zweiten Betätigungselement 2' zum Verzögern des Kraftfahrzeugs 1, sondern natürlich auch beim ersten Betätigungselement 2 zum Beschleunigen des Kraftfahrzeugs 1 vorteilhaft einsetzbar. Denn auch dort ist eine Hystere H und ein Schwellenwert E sinnvoll.

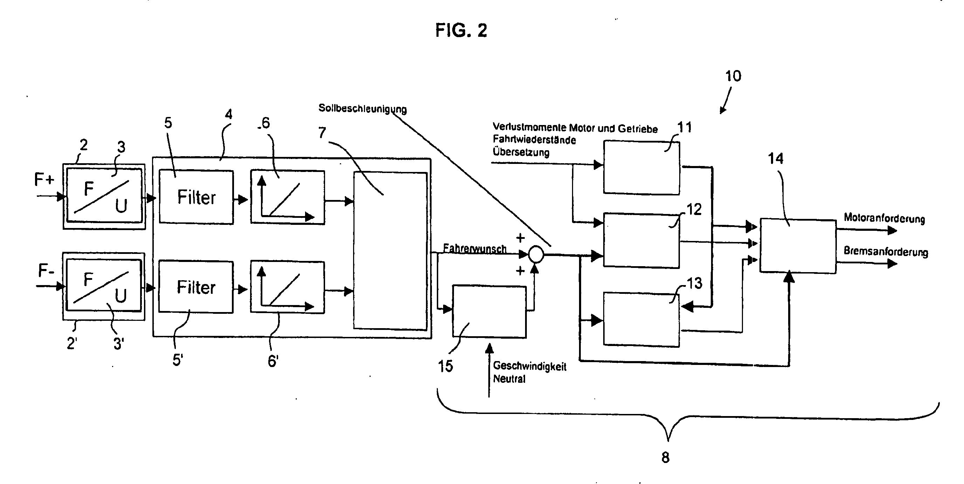

In Figur 2 ist eine weitere Ausführungsform der erfindungsgemäßen Vorrichtung zum Beschleunigen und/oder Verzögern des Kraftfahrzeugs dargestellt.

Auch in dieser Ausführungsform weist die Vorrichtung zum Beschleunigen oder Verzögern eines Kraftfahrzeugs zwei Betätigungselemente 2, 2' auf, wobei das erste Betätigungselement 2 zum Beschleunigen und das zweite Betätigungselement 2' zum Verzögern des Kraftfahrzeugs 1 dient.

Die beiden Betätigungselemente 2, 2' sind, wie bei der Ausführungsform in Figur 1, von der Aktorik zum Beschleunigen oder zum Verzögern des Kraftfahrzeugs mechanisch entkoppelt, stehen aber elektrisch damit in Verbindung und die Betätigung der Betätigungselemente 2, 2' erfolgt weitestgehend wegfrei. Das erste Betätigungselement 2 und das zweite Betätigungselement 2' umfassen in der dargestellten Ausführungsform jeweils ein Signalerfassungsglied 3, 3', wie beispielsweise einen piezokeramischen Kraftaufnehmer, Dehnungsmessstreifen oder Drehmomentenaufnehmer, die auch redundant ausgeführt sein können. Durch das Signalerfassungsglied 3, 3' wird eine vom Fahrer des Kraftfahrzeugs 1 bei Betätigung des ersten oder zweiten Betätigungselements 2, 2' aufgebrachte Hand- oder Fußkraft F, F' erfasst und proportional dazu in ein elektrisches Spannungssignal A, A' umgewandelt. Dabei können innerhalb der Betätigungselemente 2, 2' und/oder innerhalb der Signalerfassungsglieder 3, 3' auch Plausibilitätsbetrachtungen der Ein- und Ausgangssignale durchgeführt werden.

In der dargestellten Ausführungsform ist den Signalerfassungsgliedern 3, 3' jeweils als erstes Signalverarbeitungsglied 5, 5' der Signalverarbeitungseinheit 4 ein Filter nachgeschaltet, von dem aus ein gefiltertes elektrisches Spannungssignal an ein zweites Signalverarbeitungsglied 6, 6' geliefert wird. In dem zweiten Signalverarbeitungsglied 6, 6' wird anhand einer Kennlinie das elektrische Spannungssignal in ein Beschleunigungs- bzw. Verzögerungssignal umgewandelt. Die Kennlinie ist in der dargestellten Ausführungsform so gewählt, dass diese einen linearen Verlauf aufweist und einen Schwellenwert besitzt, unterhalb dessen eine Betätigungskraft als Betätigungssuchkraft angesehen wird.

Diesen beiden Verarbeitungsgliedem 6, 6' ist eine Kombinationseinheit 7 nachgeschaltet. In der Kombinationseinheit 7 wird eine Summe aus den eingehenden Beschleunigungs- bzw. Verzögerungssignalen gebildet und/oder ein Beschleunigungswunsch wird nur dann weitergeleitet, wenn kein Verzögerungswunsch vorliegt.

Der Kombinationseinheit 7 ist eine Reglereinheit 8 nachgeschaltet, die in der dargestellten Ausführungsform zumindest einen Regler 15 und eine Logikeinheit 10 umfasst. Der Regler 15, der in der dargestellten Ausführungsform einen Geschwindigkeitsregler darstellt, ist zwischen die Kombinationseinheit 7 und die Logikeinheit 10 geschaltet und wird bei Vorliegen gewisser Voraussetzungen aktiviert. Sind diese Voraussetzungen nicht erfüllt, so wird das Ausgangssignal der Kombinationseinheit 7 unmittelbar weitergeleitet.

Eine Bedingung zu der der Regler 15 aktiv ist, ist die Nicht-Betätigung der Betätigungselemente 2, 2' durch den Fahrer. In diesem Fall gibt die Kombinationseinheit 7 eine Fahrerwunschbeschleunigung von Null aus. Der Regler 15 speichert die Fahrzeuggeschwindigkeit, die beim Übergang von Betätigung des oder der Betätigungselemente 2, 2' auf Nicht-Betätigung anliegt als erstes Eingangssignal und regelt diese Geschwindigkeit mittels eines PI-Reglers ein. In der Gangstellung "Neutral", die das zweite Eingangssignal des Reglers 15 darstellt, wird der Regler 15 deaktiviert. Der Regelausgang wird der Fahrerwunschbeschleunigung überlagert, d.h. mit dieser addiert. Ist der Regler 15 aktiv, so ist die Fahrerwunschbeschleunigung gleich Null und ist der Regler 15 inaktiv, so ist der Reglerausgang gleich Null. Das Ergebnis dieser Überlagerung stellt die Sollbeschleunigung des Kraftfahrzeugs dar.

Dieser Wert der Sollbeschleunigung wird der Logikeinheit 10 zugeführt. In dieser ist in der dargestellten Ausführungsform ein Logikblock 11 für Antriebsverzögerung, ein Logikblock 12 für den Antrieb und ein Logikblock 13 für die Bremse vorgesehen. Weiterhin umfasst die Logikeinheit 10 einen Logikblock 14 für die Koordination. Der Ausgang dieser Logikeinheit 14 gibt die Motor- und Bremsanforderungen an, die an die Aktorik der Bremse oder des Motors, beispielsweise in Form von Steuersignalen für die entsprechenden Steuergeräte, geleitet werden können.

Mit dem Logikblock 11 für die Antriebsverzögerung ist mindestens eine Bestimmungseinheit (nicht dargestellt) für die Bestimmung unterschiedlicher Einflüsse verbunden. Von den Bestimmungseinheiten werden Werte für beispielsweise Fahrtwiderstände, wie den Roll- und Luftwiderstand, die Fahrzeugmasse und die Fahrbahnsteigung geliefert, wobei die beiden letztgenannten auch durch Schätzungen ermittelt werden können. Weiterhin werden Werte über Verlustmomente Motor/Getriebe und die Übersetzung bestimmt. Aus diesen Werten wird in dem Logikblock 11 für die Antriebsverzögerung die durch das Motorschleppmoment maximal mögliche Verzögerung berechnet.

Wie sich aus Figur 2 ergibt, wird der Wert der Sollbeschleunigung an die Logikblöcke für den Antrieb 12 und die Bremse 13 geleitet.

Der Logikblock für den Antrieb 12 berechnet aufgrund von Fahrtwiderständen, Verlustmomenten Motor/Getriebe, der Übersetzung und der Sollbeschleunigung die zur Einstellung dieser Sollbeschleunigung notwendige Motoranforderung. Wohingegen der Logikblock für die Bremse 13 aus der Verzögerung durch Motorschleppmoment, der Sollbeschleunigung und den Fahrtwiderständen die zur Einstellung dieser Sollbeschleunigung notwendige Bremsanforderung berechnet.

Sollte die von dem Logikblock 11 für die Antriebsverzögerung ermittelte maximale Verzögerung ausreichen um die Fahrerwunschbeschleunigung einzustellen, so schaltet die Logik-Koordination 14 den Ausgang des Logikblocks für den Antrieb 12 durch. Dies bedeutet, dass die Logikeinheit 10 nur auf den Antrieb des Kraftfahrzeugs wirkt, insbesondere diesen ansteuert. Reicht die maximale Verzögerung nicht aus, um die gewünschte Fahrzeugbeschleunigung einzustellen, so schaltet die Logik-Koordination 14 den Ausgang des Logikblocks der Bremse 13 durch, d.h. die Logikeinheit 10 wirkt nur auf die Bremse des Kraftfahrzeugs bzw. steuert diese an.

Werden im Logikblock 11 die Fahrtwiderstände oder Teile daraus nicht berücksichtigt, so werden Einflüsse, die unabhängig von der Betätigung oder Nicht-Betätigung der Betätigungselemente zu einer Beschleunigung oder Verzögerung des Kraftfahrzeugs führen, in der Reglereinheit 8 nicht mehr berücksichtigt. Die nicht berücksichtigten Fahrtwiderstände bzw. Teile daraus wirken somit und müssen vom Fahrer bzw. bei Fahrerwunschbeschleunigung Null vom Regler ausgeglichen werden.

In einer bevorzugten Ausführungsform kann der Fahrer zwischen einem Sport- und einem Komfortmodus wählen. Im Sportmodus ist der Geschwindigkeitsregler 15 immer deaktiviert. Der Fahrer muß somit zum Konstanthalten der Geschwindigkeit die Geschwindigkeit über die Betätigungselemente regeln. Der Vorteil des Sportmodus liegt in der reduzierten Anzahl der Umstiegsvorgänge, d.h. Wechseln des Fusses vom Beschleunigungs- zum Bremspedal und umgekehrt, beim Herantasten an die Fahrzeuggrenzgeschwindigkeit. Im Komfortmodus ist der Geschwindigkeitsregler nur bei Fahrerbeschleunigungswunsch Null aktiv. Bei Nichtbetätigung behält das Fahrzeug seine Geschwindigkeit bei.

Die Erfindung ist nicht auf die dargestellten Ausführungsformen beschränkt.

Mit der erfindungsgemäßen Vorrichtung können eine Anzahl von Vorteilen erzielt werden. So kann bei gleicher Fahrzeugaußenlänge die Innenraumlänge durch den Wegfall der Pedalwege um ca. 120mm gegenüber herkömmlichen Fahrzeugen verlängert werden. Dieser Längenunterschied entspricht dem Längenunterschied zu der nächst höheren Fahrzeugklasse. Wird auf einen Stufensprung, d.h. ein versetztes Anordnen der Betätigungselemente, verzichtet, so kann der Anhalteweg bei der erfindungsgemäßen Vorrichtung auf zweifache Weise verringert werden. Zum einen wird der Anhalteweg aufgrund des Verzichts des Stufensprungs und zum anderen durch den Verzicht des Pedalwegs verkürzt und somit die Sicherheit erhöht. Weiterhin kann die Vorrichtung durch Zweifußbedienung ohne Probleme betätigt werden, da das Beschleunigungs- und das Verzögerungssignal miteinander verarbeitet werden. Bei herkömmlichen Fahrzeugen besteht die Gefahr, dass bei falsch gewählter Sitzposition die notwendigen langen Pedalwege bzw. die hohen Pedalkräfte, die insbesondere für eine Notbremsung erforderlich sind, vom Fahrer nicht erreicht werden können. Bei der vorliegenden Erfindung durchlaufen die Betätigungselemente keinen Schwenkbereich. Ist der Fahrer daher in der Lage, aus seiner Sitzposition heraus eine Komfortbremsung durchzuführen, so kann er aus dieser Sitzposition heraus auch eine Notbremsung ausführen.

Eine besonders bevorzugte Ausführungsform des Sportmodus zeichnet sich dadurch aus, dass keine Geschwindigkeitsregelung während der Nichtbetätigung vorgenommen wird, aus Komfortgründen möglichst alle Einflüsse, wie Fahrtwiderstände, Rollreibung, Steigung, Masse, Motor- und Getriebeverlustmoment, berücksichtigt werden, jedoch in Untermodi ein verzicht auf Fahrtwiderstände und/oder der Steigung und/oder der Masse zur Unterstreichung der Sportlichkeit möglich ist.

Eine besonders bevorzugte Ausführungsform des Komfortmodus zeichnet sich dadurch aus, dass eine Geschwindigkeitsregelung vorhanden ist und aus Komfortgründen möglichst alle Einflüsse, wie Fahrtwiderstände, Rollreibung, Steigung, Masse, Motor- und Getriebeverlustmoment, berücksichtigt werden.

Das Merkmal der Kraftvariation, insbesondere in den drei Stufen leicht, mittel, schwer, ist sowohl mit dem Sportmodus als auch dem Komfortmodus frei kombinierbar.

## Patentansprüche

1. Vorrichtung zum Beschleunigen und/oder Verzögern eines Kraftfahrzeugs, die zumindest ein Betätigungselement (2, 2') zum Beschleunigen oder Verzögern des Kraftfahrzeugs aufweist, **dadurch gekennzeichnet, dass** das mindestens eine Betätigungselement (2, 2') wegfrei arbeitet und die Geschwindigkeit des Kraftfahrzeugs nach dem Wegnehmen der Betätigungskraft von dem Betätigungselement (2, 2') in Abhängigkeit der zuletzt eingestellten Geschwindigkeit konstant gehalten wird.

2. Vorrichtung gemäß Anspruch 1, **dadurch gekennzeichnet, dass** diese zumindest eine Reglereinheit (8) umfasst, in der die Geschwindigkeit des Kraftfahrzeugs geregelt wird.

3. Vorrichtung gemäß Anspruch 2, **dadurch gekennzeichnet, dass** die Reglereinheit zumindest einen P-Anteil und einen I-Anteil enthält.

4. Vorrichtung gemäß einem der Ansprüche 2 oder 3, **dadurch gekennzeichnet, dass** der Regler (15) aktiviert wird, wenn die Fahrerwunschbeschleunigung gleich Null ist.

5. Vorrichtung gemäß einem der Ansprüche 2 bis 4, **dadurch gekennzeichnet, dass** der Regler (15) zur Geschwindigkeitsregelung manuell aktiv oder inaktiv geschaltet werden kann.

6. Vorrichtung gemäß einem der Ansprüche 2 bis 5, **dadurch gekennzeichnet, dass** die Reglereinheit (8) zumindest eine Logikeinheit (10) umfasst, in der zumindest ein Logikblock (11) vorgesehen ist, in dem mindestens ein Einfluss, der von der aufgebrachten Betätigungskraft unabhängig ist, berücksichtigt wird.

7. Vorrichtung gemäß Anspruch 6, **dadurch gekennzeichnet, dass** der Logikblock (11) zur Berücksichtung von Verzögerungs- oder Beschleunigungseinflüssen mit zumindest einer Bestimmungseinheit zur Bestimmung von Antriebsverzögerungseinflüssen verbunden ist.

8. Vorrichtung gemäß einem der Ansprüche 6 oder 7, **dadurch gekennzeichnet, dass** in dem Logikblock (11) zur Berücksichtung von Verzögerungs- oder Beschleunigungseinflüssen die durch das Motorschleppmoment wirkende, insbesondere maximal mögliche, Verzögerung berechnet wird.

9. Vorrichtung gemäß einem der Ansprüche 6 bis 8, **dadurch gekennzeichnet, dass** dem Logikblock (11) zur Berücksichtung von Verzögerungs- oder Beschleunigungseinflüssen zumindest eine Einheit zur Schätzung von Einflussgrößen zugeordnet ist.

10. Vorrichtung gemäß einem der Ansprüche 6 bis 9, **dadurch gekennzeichnet, dass** die Logikeinheit (10) zumindest einen Logikblock (13) für die Bremse des Kraftfahrzeugs, einen Logikblock (12) für den Antrieb des Kraftfahrzeugs und zumindest einen Logikblock (14) für die Koordination der Ausgaben von den anderen Logikblöcken oder weiteren Einrichtungen des Kraftfahrzeugs aufweist.

11. Vorrichtung gemäß Anspruch 10, **dadurch gekennzeichnet, dass** die weiteren Einrichtungen des Kraftfahrzeugs Fahrerassistenzsysteme darstellen.

12. Vorrichtung gemäß einem der Ansprüche 1 bis 11, **dadurch gekennzeichnet, dass** die beiden Betätigungselemente (2, 2') jeweils ein Signalerfassungsglied (3, 3') aufweisen, welches die zur Betätigung der Betätigungselemente (2, 2') aufgebrachte Betätigungskraft erfasst und in ein elektrisches Spannungssignal umwandeln.

13. Vorrichtung nach Anspruch 12, **dadurch gekennzeichnet, dass** den beiden Betätigungselementen (2, 2) jeweils ein erstes Signalverarbeitungsglied (5, 5') zugeordnet ist, welches das von dem Signalerfassungsglied (3, 3') ausgegebene elektrische Spannungssignal anhand einer ersten Kennlinie in ein Beschleunigungs- bzw. Verzögerungssignal umwandelt.

14. Vorrichtung nach Anspruch 13, **dadurch gekennzeichnet, dass** in der Vorrichtung mindestens zwei Kennlinien abgespeichert sind, die wahlweise zur Umwandlung des elektrischen Spannungssignals verwendet werden können.

15. Vorrichtung nach einem der Ansprüche 13 oder 14, **dadurch gekennzeichnet, dass** den beiden Betätigungselementen (2, 2') jeweils ein zweites Signalverarbeitungsglied (6, 6') zugeordnet ist, welches das von dem ersten Signalverarbeitungsglied (5, 5') erhaltene Beschleunigungs- oder Verzögerungssignal anhand einer zweiten optimierten Kennlinie in ein optimiertes Beschleunigungs- bzw. Verzögerungssignal umwandelt.

16. Vorrichtung nach einem der Ansprüche 1 bis 15, **dadurch gekennzeichnet, dass** diese zumindest eine Kombinationseinheit (7) umfasst, in der die Signale, die von den Betätigungselementen (2, 2') erzeugt werden, miteinander verarbeitet werden.

17. Vorrichtung nach einem der Ansprüche 12 bis 16, **dadurch gekennzeichnet, dass** die optimierten Beschleunigungs- bzw. Verzögerungssignale aus dem zweiten Signalverarbeitungsglied (6, 6') der Kombinationseinheit (7) zugeführt werden, in der daraus die Fahrerwunschbeschleunigung bestimmt wird.

18. Vorrichtung nach einem der Ansprüche 15 bis 17, **dadurch gekennzeichnet, dass** die optimierte Kennlinie eine Hysterese (H) aufweist.

19. Vorrichtung nach Anspruch 18, **dadurch gekennzeichnet, dass** der aufsteigende Zweig (H1) der Hysterese (H) gegenüber dem abfallenden Zweig (H2) der Hysterese (H) zu höheren Werten des Beschleunigungs- bzw. Verzögerungssignals versetzt ist.

20. Vorrichtung nach einem der Ansprüche 15 bis 19, **dadurch gekennzeichnet, dass** die optimierte Kennlinie in ihrem unteren Bereich einen Schwellwert (E) aufweist, der überschritten werden muss, bevor ein optimiertes Beschleunigungs- oder Verzögerungssignal ausgegeben wird.

21. Vorrichtung nach einem der Ansprüche 1 bis 20, **dadurch gekennzeichnet, dass** die beiden Betätigungselemente (2, 2') in das Bodenblech des Kraftfahrzeugs integriert sind.

22. Vorrichtung nach einem der Ansprüche 1 bis 20, **dadurch gekennzeichnet, dass** die beiden Betätigungselemente (2, 2') durch einen oder mehrere auf dem Bodenblech des Kraftfahrzeugs angeordnete Adapter gebildet sind.

23. Vorrichtung nach einem der Ansprüche 1 bis 22, **dadurch gekennzeichnet, dass** die beiden Betätigungselemente (2, 2') im wesentlichen in einer gemeinsamen Ebene angeordnet sind.

24. Verfahren zur Einstellung der Geschwindigkeit eines Kraftfahrzeugs, das zumindest ein Betätigungselement zur Verzögerung oder zum Beschleunigen des Kraftfahrzeugs umfasst, **dadurch gekennzeichnet, dass** das zumindest eine Betätigungselement wegfrei arbeitet, und die Geschwindigkeit des Kraftfahrzeugs entsprechend der Geschwindigkeit, die das Kraftfahrzeug bei Beendigung der letzten Betätigung eines Betätigungselements aufwies, eingeregelt wird, aufgrund der Betätigung des mindestens einen Betätigungselements und aufgrund des Reglerausgangs eine Sollbeschleunigung bestimmt wird, diese mit einem Wert für eine maximale Antriebsverzögerung, die durch das Motorschleppmoment erzielt werden kann, verarbeitet wird und daraus koordinierte Motor- und Bremsanforderungen erzeugt werden.

## Claims

1. Apparatus for acceleration and/or deceleration of a motor vehicle, comprising at least one actuation element (2, 2') for accelerating or decelerating the motor vehicle, **characterised in that** the at least one actuation element (2, 2') operates without actuation displacement and the speed of the motor vehicle is maintained constant, after removal of the actuating force from the actuation element (2, 2'), in dependence on the speed last set.

2. Apparatus according to claim 1, **characterised in that** it includes at least one control unit (8) in which the speed of the motor vehicle is controlled.

3. Apparatus according to claim 2, **characterised in that** the control unit includes at least one P portion and one I portion.

4. Apparatus according to either of claims 2 and 3, **characterised in that** the controller (15) is activated when the driver's desired acceleration equals zero.

5. Apparatus according to any one of claims 2 to 4, **characterised in that** the controller (15) for speed control can be switched manually to the active or inactive state.

6. Apparatus according to any one of claims 2 to 5, **characterised in that** the control unit (8) includes at least one logic unit (10) in which there is provided at least one logic block (11) in which at least one influence which is independent of the actuation force applied is taken into account.

7. Apparatus according to claim 6, **characterised in that** the logic block (11) for taking account of deceleration or acceleration influences is connected to at least one determination unit for determining drive deceleration influences.

8. Apparatus according to any one of claims 6 or 7, **characterised in that** the deceleration, in particular the maximum possible deceleration, acting through the engine drag moment is calculated in the logic block (11) for taking account of deceleration or acceleration influences.

9. Apparatus according to any one of claims 6 to 8, **characterised in that** at least one unit for estimating influence magnitudes is associated with the logic block (11) for taking account of deceleration or acceleration influences.

10. Apparatus according to any one of claims 6 to 9, **characterised in that** the logic unit (10) includes at least one logic block (13) for the brake of the motor vehicle, a logic block (12) for the drive of the motor vehicle and at least one logic block (14) for coordinating the outputs of the other logic blocks or further devices of the motor vehicle.

11. Apparatus according to claim 10, **characterised in that** the further devices of the motor vehicle are driver assistance systems.

12. Apparatus according to any one of claims 1 to 11, **characterised in that** the two actuation elements (2, 2') each have a respective signal acquisition unit (3, 3') which detects the actuation force applied for actuation of the actuation element (2, 2') and converts same into an electrical voltage signal.

13. Apparatus according to claim 12, **characterised in that** there is associated with each of the two actuation elements (2, 2') a respective first signal processing unit (5, 5') which converts the electrical voltage signal outputted by the signal acquisition unit (3, 3') into an acceleration or deceleration signal with reference to a first characteristic curve.

14. Apparatus according to claim 13, **characterised in that** at least two characteristic curves which can be used selectively for converting the electrical voltage signal are stored in the apparatus.

15. Apparatus according to either of claims 13 and 14, **characterised in that** there is associated with each of the two actuation elements (2, 2') a respective second signal processing unit (6, 6') which converts the acceleration or deceleration signal received by the first signal processing unit (5, 5') into an optimised acceleration of deceleration signal with reference to a second, optimised characteristic curve.

16. Apparatus according to any one of claims 1 to 15, **characterised in that** it includes at least one combination unit (7) in which the signals generated by the actuation elements (2, 2') are processed with one another.

17. Apparatus according to any one of claims 12 to 16, **characterised in that** the optimised acceleration and deceleration signals are supplied from the second signal processing unit (6, 6') to the combination unit (7), in which the driver's desired acceleration is determined therefrom.

18. Apparatus according to any one of claims 15 to 17, **characterised in that** the optimised characteristic curve includes a hysteresis (H).

19. Apparatus according to claim 18, **characterised in that** the ascending branch (H1) of the hysteresis (H) is offset to higher values of the acceleration or deceleration signal with respect to the descending branch (H2) of the hysteresis (H).

20. Apparatus according to any one of claims 15 to 19, **characterised in that** the optimised characteristic curve has in its lower portion a threshold value (E) which must be exceeded before an optimised acceleration or deceleration signal is outputted.

21. Apparatus according to any one of claims 1 to 20, **characterised in that** the two actuation elements (2, 2') are integrated in the floor panel of the motor vehicle.

22. Apparatus according to any one of claims 1 to 20, **characterised in that** the two actuation elements (2, 2') are formed by one or more adapters arranged on the floor panel of the motor vehicle.

23. Apparatus according to any one of claims 1 to 22, **characterised in that** the two actuation elements (2, 2') are arranged substantially in a common plane.

24. Method for adjusting the speed of a motor vehicle which includes at least one actuation element for decelerating or accelerating the motor vehicle, **characterised in that** the at least one actuation element operates without actuation displacement and the speed of the motor vehicle is adjusted according to the speed of the motor vehicle at the end of the last actuation of an actuation element, a reference acceleration is determined on the basis of the actuation of the at least one actuation element and on the basis of the controller output, said reference acceleration is processed with a value for a maximum drive deceleration which can be attained by the engine drag moment, and coordinated engine and braking requests are generated therefrom.

## Revendications

1. Dispositif d'accélération et / ou de décélération d'un véhicule automobile présentant au moins un élément de commande (2 ,2') pour l'accélération ou la décélération du véhicule automobile, **caractérisé en ce qu'**au moins un élément de commande (2, 2') fonctionne sans course et **en ce que** la vitesse du véhicule automobile après l'enlèvement de la force de commande de l'élément de commande (2, 2') est maintenue constante en fonction de la vitesse réglée en dernier lieu.

2. Dispositif selon la revendication 1, **caractérisé en ce que** ce dernier comprend au moins une unité de réglage (8) dans laquelle la vitesse du véhicule automobile est réglée.

3. Dispositif selon la revendication 2, **caractérisé en ce que** l'unité de réglage contient au moins une partie P et une partie I.

4. Dispositif selon l'une des revendications 2 ou 3, **caractérisé en ce que** le régulateur (15) est activé lorsque l'accélération souhaitée par le conducteur est équivalente à zéro.

5. Dispositif selon l'une des revendications 2 à 4, **caractérisé en ce que** le régulateur (15) pour le réglage de la vitesse peut être activé ou désactivé manuellement.

6. Dispositif selon l'une des revendications 2 à 5, **caractérisé en ce que** l'unité de réglage (8) comprend au moins une unité logique (10) dans laquelle est prévu au moins un bloc logique (11) dans lequel au moins une influence qui est indépendante de la force de commande exercée, est prise en compte.

7. Dispositif selon la revendication 6, **caractérisé en ce que** le bloc logique (11) pour la prise en compte des influences de décélération ou d'accélération est relié à au moins une unité de détermination pour la détermination des influences de décélération de l'entraînement.

8. Dispositif selon l'une des revendications 6 ou 7, **caractérisé en ce que**, notamment la décélération maximale possible, agissant via le couple d'inertie du moteur est calculée dans le bloc logique (11) pour la prise en considération des influences de décélération ou d'accélération.

9. Dispositif selon l'une des revendications 6 à 8, **caractérisé en ce qu'**au moins une unité pour l'estimation des grandeurs d'influence est associée au bloc logique (11) pour une prise en considération des influences de décélération ou d'accélération.

10. Dispositif selon l'une des revendications 6 à 9, **caractérisé en ce que** l'unité logique (10) présente au moins un bloc logique (13) pour les freins du véhicule automobile, un bloc logique (12) pour l'entraînement du véhicule automobile et au moins un bloc logique (14) pour la coordination des émissions des autres blocs logiques ou d'autres dispositifs du véhicule automobile.

11. Dispositif selon la revendication 10, **caractérisé en ce que** les autres dispositifs du véhicule automobile représentent des systèmes d'assistance au conducteur.

12. Dispositif selon l'une des revendications 1 à 11, **caractérisé en ce que** les deux éléments de commande (2, 2') présentent respectivement un organe de détection de signal (3, 3') détectant la force de commande exercée pour l'actionnement des éléments de commande (2, 2') et la transformant en un signal de tension électrique.

13. Dispositif selon la revendication 12, **caractérisé en ce qu'**un premier organe de traitement des signaux (5, 5') est respectivement affecté aux deux éléments de commande (2, 2'), lequel transforme le signal de tension électrique émis par l'organe de détection de signal (3, 3') à l'aide d'une première caractéristique en un signal d'accélération ou de décélération.

14. Dispositif selon la revendication 13, **caractérisé en ce qu'**au moins deux caractéristiques sont mémorisées dans le dispositif, ces dernières pouvant être utilisées au choix pour la transformation du signal de tension électrique.

15. Dispositif selon l'une des revendications 13 ou 14, **caractérisé en ce qu'**un second organe de traitement des signaux (6, 6') est respectivement associé aux deux éléments de commande (2, 2'), lequel transforme le signal d'accélération ou de décélération obtenu par le premier organe de traitement des signaux (5 ,5') à l'aide d'une seconde caractéristique optimisée en un signal d'accélération ou de décélération optimisé.

16. Dispositif selon l'une des revendications 1 à 15, **caractérisé en ce que** ce dernier comprend au moins une unité de combinaison (7) dans laquelle les signaux générés par les éléments de commande (2, 2') sont traités conjointement.

17. Dispositif selon l'une des revendications 12 à 16, **caractérisé en ce que** les signaux d'accélération ou de décélération optimisés sont amenés du second organe de traitement des signaux (6 ,6') à l'unité de combinaison (7) dans laquelle l'accélération désirée par le conducteur est déterminée.

18. Dispositif selon l'une des revendications 15 à 17, **caractérisé en ce que** la caractéristique optimisée présente une hystérésis (H).

19. Dispositif selon la revendication 18, **caractérisé en ce que** la branche ascendante (H1) de l'hystérésis (H) par rapport à la branche descendante (H2) de l'hystérésis (H) est décalée à des valeurs plus élevées du signal d'accélération ou de décélération.

20. Dispositif selon l'une des revendications 15 à 19, **caractérisé en ce que** la caractéristique optimisée présente dans sa zone inférieure une valeur seuil (E) qui doit être dépassée avant qu'un signal d'accélération ou de décélération optimisé ne soit émis.

21. Dispositif selon l'une des revendications 1 à 20, **caractérisé en ce que** les deux éléments de commande (2, 2') sont intégrés dans la tôle du plancher du véhicule automobile.

22. Dispositif selon l'une des revendications 1 à 20, **caractérisé en ce que** les deux éléments de commande (2, 2') sont formés par un ou plusieurs adaptateurs disposés sur la tôle du plancher du véhicule automobile.

23. Dispositif selon l'une des revendications 1 à 22, **caractérisé en ce que** les deux éléments de commande (2, 2') sont essentiellement disposés dans un plan commun.

24. Procédé de réglage de la vitesse d'un véhicule automobile comprenant au moins un élément de commande pour la décélération ou l'accélération du véhicule automobile, **caractérisé en ce que** le au moins un élément de commande fonctionne sans course et **en ce que** la vitesse du véhicule automobile est réglée conformément à la vitesse que présente le véhicule automobile à la fin de la dernière commande d'un élément de commande, une accélération de consigne étant déterminée suite à l'actionnement du au moins un élément de commande et suite à la sortie du régulateur, cette consigne étant traitée avec une valeur pour une décélération maximale de l'entraînement pouvant être atteinte via le couple d'inertie du moteur et les exigences du moteur et des freins ainsi coordonnées sont générées.
